# EUROPÄISCHE PATENTSCHRIFT

(11) **EP 2 885 853 B1**
(45) Veröffentlichungstag und Bekanntmachung des Hinweises auf die Patenterteilung: **11.09.2019**
(21) Anmeldenummer: 13733012.2
(22) Anmeldetag: 04.07.2013
(51) Int. Cl.: H02J 7/00

(54) **SCHALTBARE ENERGIESPEICHERVORRICHTUNG SOWIE VERFAHREN ZUM BETREIBEN EINER SCHALTBAREN ENERGIESPEICHERVORRICHTUNG**
SWITCHABLE ENERGY STORAGE DEVICE AND METHOD FOR OPERATING A SWITCHABLE ENERGY STORAGE DEVICE
DISPOSITIF ACCUMULATEUR D'ÉNERGIE CONNECTABLE AINSI QUE PROCÉDÉ PERMETTANT DE FAIRE FONCTIONNER UN DISPOSITIF ACCUMULATEUR D'ÉNERGIE CONNECTABLE

(30) Priorität: 14.08.2012 DE 102012214446
(43) Veröffentlichungstag der Anmeldung: 24.06.2015
(73) Patentinhaber: Robert Bosch GmbH, 70442 Stuttgart (DE)
(72) Erfinder: FEUERSTACK, Peter, 71642 Ludwigsburg (DE); WEISSENBORN, Erik, 70374 Stuttgart (DE); KESSLER, Martin, 73527 Schwaebisch Gmuend (DE)
(86) Internationale Anmeldenummer: PCT/EP2013/064162
(87) Internationale Veröffentlichungsnummer: WO 2014/026801

(56) Entgegenhaltungen:
- WO-A1-99/21241
- US-A- 5 767 660

## Beschreibung

Die Erfindung betrifft eine schaltbare Energiespeichervorrichtung und ein Verfahren zum Betreiben einer schaltbaren Energiespeichervorrichtung.

### Stand der Technik

Im Stand der Technik sind leistungselektronische Systeme bekannt, die sowohl zu einem Einsatz in stationären Anwendungen (z.B. in Windkraftanlagen) als auch im Fahrzeug (zum Beispiel Hybrid- und Elektrofahrzeugen) vorgesehen sind und die neue Batterietechnologien mit bekannter elektrischer Antriebstechnik kombinieren. Derartige Systeme umfassen beispielsweise einen Pulswechselrichter, mit dem eine elektrische Maschine (z.B. eine Drehfeldmaschine) energetisch gespeist wird. Typisch für derartige Systeme ist ein Gleichspannungszwischenkreis, über den eine Batterie an eine Gleichspannungsseite des Wechselrichters angeschlossen ist. Damit die Batterie die geforderten Leistungs- und Energiedaten bereitstellen kann, werden einzelne Batteriezellen in Serie und teilweise zusätzlich parallel geschaltet.

DE 10 2010 041 059 A1 offenbart ein Verfahren zum Einstellen einer Soll-Ausgangsspannung eines Energieversorgungszweiges eines steuerbaren Energiespeichers, welcher einer Steuerung und einer elektrischen Energieversorgung einer n-phasigen elektrischen Maschine mit n ≥ 1 dient. Dabei weist der steuerbare Energiespeicher n parallele Energieversorgungszweige auf, welche jeweils mindestens zwei in Reihe geschaltete Energiespeichermodule aufweisen, welche jeweils mindestens eine elektrische Energiespeicherzelle mit einer zugeordneten steuerbaren Koppeleinheit umfassen. Die Energiespeichermodule sind einerseits mit einer Bezugsschiene und andererseits mit jeweils einer Phase der elektrischen Maschine verbunden.

US 5,767,660 offenbart eine induktive Ladevorrichtung für einen seriellen Zweig an Energiespeicherzellen.

WO 99/21241 offenbart eine weitere induktive Ladevorrichtung für einen seriellen Zweig an Energiespeicherzellen.

### Offenbarung der Erfindung

Die Erfindung schafft gemäß einem ersten Aspekt eine schaltbare Energiespeichervorrichtung nach Anspruch 1.

Gemäß einem zweiten Aspekt schafft die vorliegende Erfindung ein Verfahren zum Betreiben einer schaltbaren Energiespeichervorrichtung nach Anspruch 10.

Bevorzugte Ausführungsformen der Erfindung sind Gegenstand von Unteransprüchen.

Eine Ausführungsform der Energiespeichervorrichtung zeichnet sich dadurch aus, dass die Ankopplungseinrichtung als ein Transformator ausgebildet ist. Dies bietet den Vorteil, dass über das Trafoprinzip eine primärseitige Einspeisung eine elektrische Ladegröße für die Energiespeicherzellen bewirkt. Hinsichtlich der Ausgestaltung der primärseitigen Energiequelle besteht ein großer Gestaltungsspielraum.

Eine weitere bevorzugte Ausführungsform der Energiespeichervorrichtung zeichnet sich dadurch aus, dass eine Primärwicklung des Transformators permanent oder abnehmbar auf einer Induktivität im Betriebsstromkreis der Energiespeichervorrichtung angeordnet ist. Dadurch kann eine bereits vorhandene Sekundärwicklung des Transformators in Form einer Drossel in einem normalen Betrieb der Energiespeichervorrichtung benutzt werden, wohingegen die Primärseite des Transformators ausschließlich in einem Ladebetrieb der Energiespeichervorrichtung benutzt wird. Denkbar ist für eine Realisierung des Transformators, eine zweite Wicklung auf eine bereits bestehende Induktivität in einem Betriebsstromkreis der Energieversorgungsvorrichtung aufzubringen. In Systemen ohne bereits bestehende Induktivität müsste für den Ladebetrieb jeweils ein kompletter Transformator im Betriebsstromkreis angeordnet werden.

Eine Ausführungsform der Energiespeichervorrichtung zeichnet sich dadurch aus, dass die Halbleiterschalter der Energiespeichermodule eine gleichrichtende Funktion für den Ladestrom übernehmen. Dies bietet den Vorteil, dass man sich für das Ladegerät eine Gleichrichterfunktionalität ersparen kann, da diese bereits in der Energiespeichervorrichtung vorhanden ist. Das Ladegerät kann demzufolge vorteilhaft technisch einfacher und dadurch kostengünstiger und ausgestaltet werden.

Eine Ausführungsform der Energiespeichervorrichtung ist dadurch gekennzeichnet, dass die Halbleiterschalter in Form einer Halbbrücke oder einer Vollbrücke angeordnet sind. Auf diese Weise können durch eine Gestaltung einer Schaltungsanordnung der Halbleiterschalter jeweils wenigstens Halbwellen oder die vollständigen Wechselsignale für das Laden der elektrischen Energiespeicherzellen verwendet werden.

Eine bevorzugte Ausführungsform der Energiespeichervorrichtung ist dadurch gekennzeichnet, dass die Energiespeichervorrichtung eine variable Anzahl von parallel geschalteten Strängen mit seriell geschalteten Energiespeichermodulen aufweist. Vorteilhaft kann auf diese Weise die Energiespeichervorrichtung modular um Stränge erweitert werden.

Eine vorteilhafte Weiterbildung der Energiespeichervorrichtung zeichnet sich dadurch aus, dass für jeden der Stränge eine serielle Induktivität bereitgestellt ist. Vorteilhaft wird dadurch eine Strombegrenzungsmaßnahme für die Energiespeichervorrichtung bereitgestellt, die ein Parallelschalten der Stränge mit im Wesentlichen ungleichen elektrischen Spannungen unterstützt.

Eine bevorzugte Ausführungsform der Energiespeichervorrichtung zeichnet sich dadurch aus, dass die Induktivität als Leitungsinduktivität des Strangs oder als eine zusätzliche diskrete Induktivität ausgebildet ist. Dadurch stehen vorteilhaft unterschiedliche Möglichkeiten zu einer Realisierung der Induktivität bereit.

Eine Ausführungsform der Energiespeichervorrichtung ist dadurch gekennzeichnet, dass eine Primärentwicklung der Ankopplungseinrichtung über einen Luftspalt getrennt beabstandet zur Sekundärwicklung der Ankopplungseinrichtung angeordnet ist. Vorteilhafterweise ermöglicht dies ein drahtloses Laden der Batteriezellen ("Wireless Charging").

Eine vorteilhafte Weiterbildung des erfindungsgemäßen Verfahrens sieht vor, dass für den Fall, dass während des Ladens keine Zwischenkreisspannung eines Kondensators erforderlich ist, der Strom mittels einer Ansteuereinrichtung am Kondensator der Energiespeichervorrichtung vorbeigeleitet wird. Dadurch wird der Kondensator dahingehend geschont, dass an ihm eine ohmsche Verlustleistung nicht umgesetzt wird, wodurch vorteilhaft eine günstigere Auslegung des Kondensators unterstützt ist.

### Vorteile der Erfindung

Als besonders vorteilhaft wird bei der Erfindung angesehen, dass eine bereits vorhandene Induktivität der Energiespeichervorrichtung bzw. des Batteriedirektumrichters erfindungsgemäß zu einem Transformator aufgerüstet bzw. umfunktioniert wird, wodurch auf einfache Weise ein induktives Laden von elektrischen Energiespeicherzellen unterstützt ist. Beispielsweise kann in einem normalen Fahrbetrieb eine Primärseite des Transformators offen bleiben, wohingegen während eines Ladevorgangs der Transformator primärseitig energetisch versorgt wird. Eine Funktionalität eines Ladegeräts wird bereits vom Batteriedirektumrichter großteils bereitgestellt, so dass folglich zum Laden der Energiesprecherzellen ein einfacher ausgelegtes Ladegerät verwendet werden kann.

Weitere Merkmale und Vorteile der vorliegenden Erfindung werden nachfolgend anhand von Ausführungsformen mit Bezug auf die Figuren erläutert. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung, sowie unabhängig von ihrer Formulierung bzw. Darstellung in der Beschreibung bzw. in den Figuren. Die Figuren sind vor allem dazu gedacht, die erfindungswesentlichen Prinzipien zu verdeutlichen und sind nicht notwendigerweise als detailgetreue Schaltbilder zu verstehen. In den Figuren bezeichnen gleiche Bezugszeichen gleiche bzw. funktionsgleiche Elemente.

### Kurze Beschreibung der Figuren

Es zeigen:
- Fig. 1: eine prinzipielle Darstellung einer schaltbaren elektrischen Energiespeichervorrichtung zum Ansteuern einer elektrischen Maschine gemäß Stand der Technik;
- Fig. 2: eine prinzipielle Darstellung einer weiteren schaltbaren elektrischen Energiespeichervorrichtung zum Ansteuern einer elektrischen Maschine;
- Fig. 3a: eine prinzipielle Darstellung einer ersten Ausführungsform der erfindungsgemäßen schaltbaren Energiespeichervorrichtung in einer Phase eines Ladevorgangs;
- Fig. 3b: eine prinzipielle Darstellung der ersten Ausführungsform der erfindungsgemäßen schaltbaren Energiespeichervorrichtung in einer weiteren Phase des Ladevorgangs;
- Fig. 4: eine prinzipielle Darstellung einer weiteren Ausführungsform der erfindungsgemäßen schaltbaren Energiespeichervorrichtung; und
- Fig. 5: eine prinzipielle Darstellung einer weiteren Ausführungsform der erfindungsgemäßen schaltbaren Energiespeichervorrichtung.

### Ausführungsformen der Erfindung

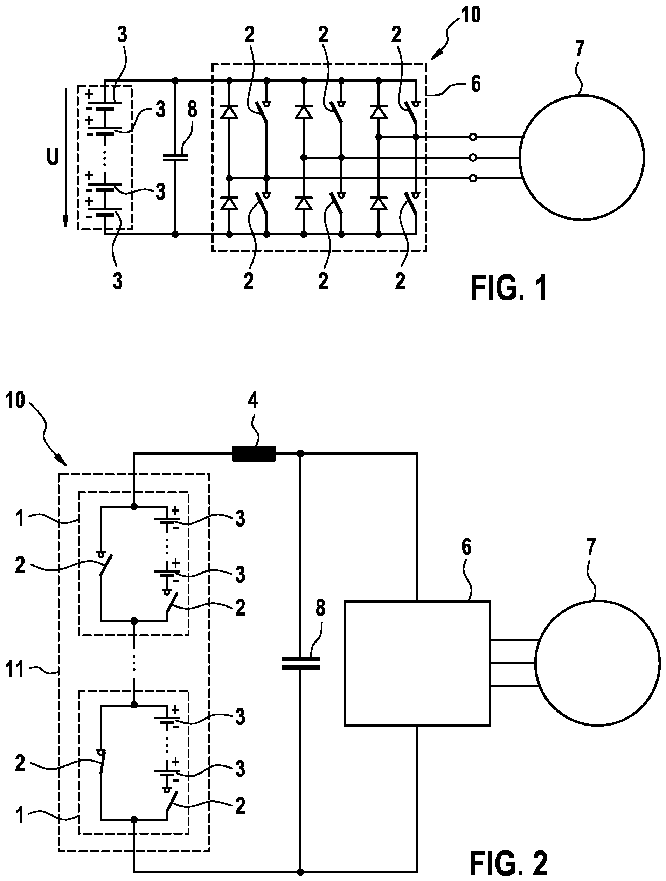

Fig. 1 zeigt eine prinzipielle Darstellung einer konventionellen schaltbaren Energiespeichervorrichtung 10. Dabei werden mehrere elektrische Energiespeicherzellen 3 (z.B. wiederaufladbare Akkumulatorzellen) in Serie geschaltet, deren gesamte Ausgangsspannung U von einem Kondensator 8 eines Gleichspannungszwischenkreises gepuffert wird. Eine elektronische Ansteuereinrichtung 6, die vorzugsweise als Pulswechselrichter ausgebildet ist, ist vorgesehen, um durch abwechselndes Öffnen und Schließen von Halbleiterschaltern 2 Phasen für eine dreiphasige elektrische Maschine 7 (Drehfeldmaschine) zu erzeugen. Damit die Batterie die geforderten Leistungs- und Energiedaten bereitstellen kann, werden einzelne Energiespeicherzellen 3 teilweise noch zusätzlich parallel geschaltet. Ein zu einem Laden der Energiespeicherzellen 3 vorgesehenes Ladegerät (nicht dargestellt) muss demnach den gesamten Spannungsbereich der gesamten Batterie abdecken können.

Fig. 2 zeigt eine andere Ausführungsart einer steuer- bzw. schaltbaren Energiespeichervorrichtung 10 in Form eines einsträngigen Batteriedirektumrichters, die zu einem energetischen Ansteuern einer Elektromaschine verwendet werden kann. Die Energiespeichervorrichtung 10 weist wenigstens einen Strang 11 auf, in welchem zwei Energiespeichermodule 1 in Serie geschaltet sind. Jedes der Energiespeichermodule 1 weist elektrische Energiespeicherzellen 3 auf, die mittels Halbleiterschalter 2 in einen Betriebsstromkreis schaltbar sind. Dadurch kann mittels einer Variation der Schaltvorgänge für die Halbleiterschalter 2 eine variable Spannung als Ausgangsspannung der Energiespeichervorrichtung 10 bereitgestellt werden.

Ein von der Ausgangsspannung getriebener Strom fließt über eine Induktivität 4, die vorzugsweise als eine leistungsmäßig stark dimensionierte Drossel ausgebildet ist, wobei die Induktivität 4 zu einer Strombegrenzung für einen Kondensator 8 vorgesehen ist. Der Kondensator 8 ist vorgesehen, um ein getaktetes Betreiben der Energiespeichervorrichtung 10 zu ermöglichen. Dabei wird die Ausgangsspannung der Energiespeichervorrichtung 10 einer elektronischen Ansteuereinrichtung 6 (z.B. einem PWM (pulsweitenmoduliertem)-Inverter) zugeführt. Die Ansteuereinrichtung 6 erzeugt drei Phasenspannungen für eine Elektromaschine 7.

Erfindungsgemäß ist nunmehr vorgesehen, die Induktivität 4 derart aufzurüsten bzw. abzuwandeln, dass dadurch ein induktives Laden der Energiespeicherzellen 3 innerhalb der Energiespeichermodule 1 ermöglicht ist.

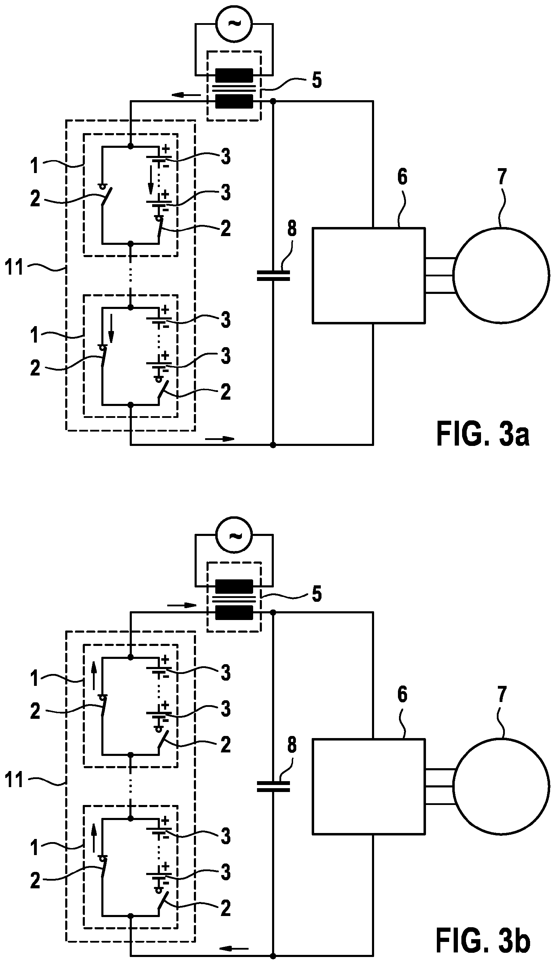

Zu diesem Zweck ist, wie in Fig. 3a erkennbar, die Induktivität 4 mit einer zweiten Wicklung ausgestattet, wodurch eine Ankopplungseinrichtung 5 bereitgestellt wird, die einen Transformator mit zwei voneinander galvanisch getrennten Kreisen repräsentiert. Eine Primärseite der Ankopplungseinrichtung 5 kann zum Ankoppeln einer elektrischen Wechselquelle verwendet werden. Dabei ist für die Wechselsignalquelle auf der Primärseite eine große Vielfalt von diversen Quellen denkbar. Es wird die Induktivität 4 somit magnetisch mit einer weiteren Wicklung gekoppelt, so dass je nach Windungszahlen eine transformatorische Wechselwirkung zwischen den beiden Wicklungen entsteht. Im Folgenden wird die Wicklung, auf der Energiequelle angebracht wird, mit "Primärseite" bezeichnet und die galvanisch mit dem Betriebsstromkreis der elektrischen Energiespeichervorrichtung 10 verbundene Wicklung der Ankopplungseinrichtung 5 als "Sekundärseite".

Anhand der Fig. 3a ist ein Ladevorgang exemplarisch für eine Wechselstromquelle mit sinusförmiger Ausgangsgröße dargestellt. Während einer positiven Halbwelle fließt der Strom gemäß Fig. 3a in die zu ladenden Energiespeicherzellen 3 bzw. an den nicht zu ladenden Energiespeicherzellen 3 vorbei. Mittels Pfeilen ist eine Richtung des Ladestroms angedeutet. Dabei schließt sich der Ladestrom entweder über den Kondensator 8 oder über Dioden (nicht dargestellt) der elektronischen Ansteuereinrichtung 6. Eine Gesamtausgangsspannung eines Strangs 11 wird bestimmt durch den von außen steuerbaren Schaltzustand der Halbleiterschalter 2 an den einzelnen Energiespeichermodulen 1 und kann stufig eingestellt werden. Eine Stufung der Ausgangsspannung ergibt sich aus der Spannung der einzelnen Module. Die maximal mögliche Gesamtspannung ergibt sich aus der Modulspannung mal der pro Strang 11 vorhandenen Energiespeichermodule 1.

Falls während des Ladevorgangs keine Zwischenkreisspannung des Kondensators 8 benötigt wird, können zu einer Effizienzsteigerung auch alle Halbleitschalter 2 der Halbbrücken der Energiespeichermodule 1 durchgeschaltet werden, um dadurch einen niederohmigen Strompfad zu realisieren. Auf diese Weise kann der Kondensator 8 leistungsmäßig vorteilhaft schwächer und damit kostengünstiger ausgebildet werden.

Anhand von Fig. 3b ist der Ladevorgang für die negative Halbwelle des Ladestroms gezeigt, wobei eine Stromflussrichtung durch Pfeile angedeutet ist. In diesem Fall wird der Strom an allen Energiespeicherzellen 3 der Energiespeichermodule 1 vorbeigeleitet. Der Stromkreis schließt sich auch hier über den Kondensator 8 oder über die Dioden der Ansteuereinrichtung 6. Im ersten Fall wird der Kondensator 8 geladen und die zusätzliche Ladung wird bei der nächsten positiven Halbwelle an den Strang 11 abgegeben, so dass eine mittlere Zwischenkreisspannung im Wesentlichen konstant bleibt. Wird die Ansteuereinrichtung 6 für beide Halbwellen als niederohmiger Strompfad genutzt, entfällt eine Beteiligung des Kondensator 8 und die damit verbundene Wechselstrom-Belastung des Kondensators 8. Damit ist diese Variante auch für eine schaltbare Energiespeichervorrichtung 10 ohne Zwischenkreis-Kondensator 8 geeignet.

Obwohl in den Figuren 3a und 3b ein System mit kommutierender, d.h. getakteter Ansteuereinrichtung 6 mit dazu erforderlichem Kondensator 8 dargestellt ist, lässt sich die Erfindung auch für eine nicht kommutierende Betriebsart der Energiespeichervorrichtung 10 anwenden. Im zweiten Fall fehlt der Kondensator 8 und es ist im normalen (Fahr)-Betrieb daher auch keine Induktivität 4 zur Strombegrenzung erforderlich. Folglich ist im Ladebetrieb der Energiespeichervorrichtung 10 ein vollständiges Bereitstellen der erfindungsgemäßen Ankopplungseinrichtung 5, und nicht nur ein Aufrüsten der Induktivität 4 mit einer Primärwicklung, erforderlich.

Die in den Figuren 3a und 3b auf der Primärseite der Ankopplungseinrichtung 5 dargestellte Wechselstromquelle kann mit unterschiedlichsten DC/AC-Wandlertypen (Halbbrücken, Vollbrücken, etc.) erweitert werden, die aus einer DC-Quelle eine Energieübertragung über die Ankopplungseinrichtung 5 ermöglichen. DC-Quelle steht dabei stellvertretend für verschiedenste speisende Energiequellen, wie beispielsweise eine Solarzelle, eine 14 V-Batterie, usw.

Ebenso besteht auf der Primärseite der Ankopplungseinrichtung 5 auch keine Beschränkung auf Stromquellen. Hier könnten auch AC-Spannungsquellen verwendet werden, wobei in diesem Fall der Ladestrom über eine Regelung einer Amplitude bzw. eines Tastverhältnisses auf der Primärseite eingestellt werden kann.

Aufgrund der von der erfindungsgemäßen Ankopplungseinrichtung 5 bereitgestellten galvanischen Trennung und der transformatorischen Kopplung ist die Energiespeichervorrichtung 10 also vorteilhaft sehr flexibel an unterschiedliche Primärseiten adaptierbar. Zudem können dadurch beispielsweise mit standardisierten primärseiten Energiequellen Energiespeichervorrichtungen 10 mit unterschiedlichsten Modulspannungen geladen werden. Die Primärseite der Ankopplungseinrichtung 5 kann sich alternativ auch örtlich außerhalb der Energiespeichervorrichtung 10 befinden. So ist es beispielsweise denkbar, dass die Primärseite in einem definierten Abstand von der Sekundärseite angeordnet ist, wodurch das so genannte "induktive Laden" oder "Wireless Charging" von Elektrofahrzeugen ermöglicht ist.

In dieser Ausführungsform befindet sich die Primärentwicklung des Transformators über einen Luftspalt getrennt in einem gewissen Abstand zur Sekundärwicklung/Drossel des Ladekreises. Dadurch kann die Drossel bzw. Induktivität 4 der Energiespeichervorrichtung 10 als Empfängerspule bei einem drahtlosen Laden (z.B. resonantes Laden von Elektro- oder Hybridfahrzeugen) mitgenutzt werden. Die Halbleiterschalter 2 der Energiespeichermodule 1 übernehmen auch in diesem Fall die Funktion der Gleichrichtung, so dass die elektrische Energiespeichervorrichtung 10 die Sekundärseite eines "Wireless Charging"-Systems mit beinhaltet.

Anhand der Fig. 3a und 3b wurde beispielhaft ein einzelnes Energiespeichermodul 1 geladen. Selbstverständlich können die zu ladenden Energiespeichermodule 1 aber auch variiert werden, um dadurch eine Belastung, und/oder eine Wärmeerzeugung und/oder einen Ladezustand ausgleichen. Somit können beispielsweise mit einer konstanten, gegebenenfalls genormten Wechselgrößenquelle Energiespeichervorrichtungen 10 unterschiedlicher Größe (z.B. betreffend Zellenanzahl, maximale Spannung, usw.) geladen werden.

Die Erfindung ist vorteilhaft auch nicht auf die bisher gezeigten mit Halbleiterschaltern 2 gebildeten Halbbrücken der Energiespeichermodule 1 beschränkt. Alle bisher beschriebenen Ausführungsformen sind auch mit Vollbrücken betreibbar. Dadurch können für das Laden der Energiespeichermodule 1 vorteilhaft sowohl die positiven als auch die negativen Halbwellen genutzt werden.

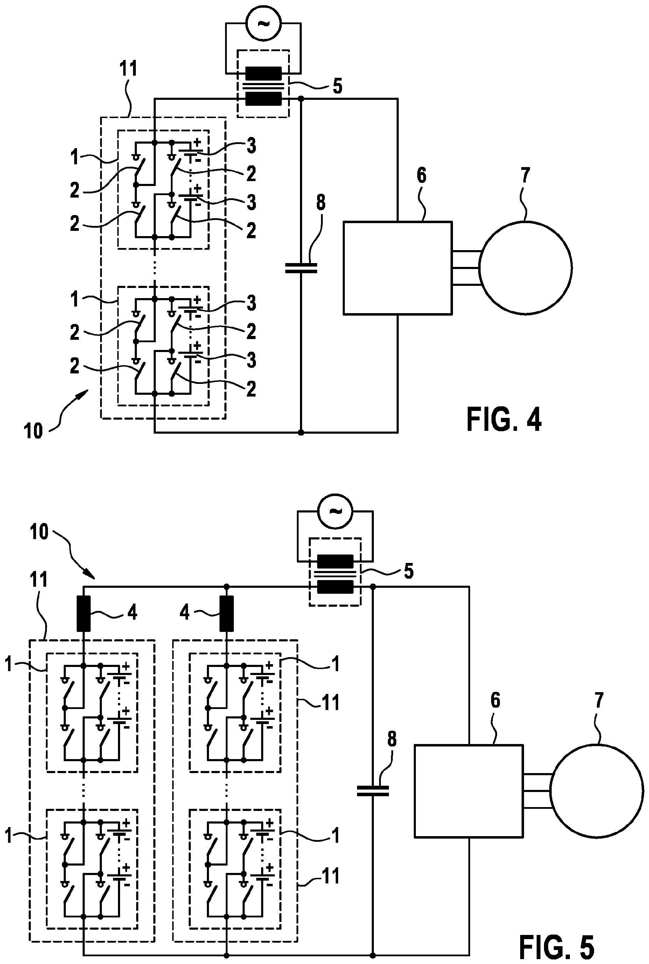

Fig. 4 zeigt in einer prinzipiellen Darstellung ein derartiges System. In Abhängigkeit von der gewünschten elektrischen Gleichspannung über dem Strang 11 des Batteriedirektumrichters können Energiespeichermodule 1 unabhängig voneinander in den Ladestromkreis geschaltet werden. Je nach Stellung der Halbleiterschalter 2 der Vollbrücke wird ein Energiespeichermodul 1 gebrückt oder durch eine positive und/oder negative Halbwelle geladen. Zu einer besseren Übersichtlichkeit sind in den Energiespeichermodulen 1 der Fig. 4 alle Halbleiterschalter 2 geöffnet dargestellt.

Wie man in Fig. 5 erkennen kann, ist die Erfindung auch nicht auf einen einzelnen Strang 11 beschränkt, sondern lässt sich auf eine beliebige Anzahl parallel geschalteter Stränge 11 erweitern, die vorteilhaft gleichzeitig und individuell geladen werden können. Exemplarisch ist in Fig. 5 ein System mit zwei parallelen Strängen 11 dargestellt. Der besseren Übersichtlichkeit halber sind hier die einzelnen Elemente innerhalb der Energiespeichermodule 1 nicht mit Bezugszeichen versehen. Eine Aufteilung des Summen-Ladestroms auf die einzelnen Stränge 11 kann durch ein Verhältnis der pro Strang 11 zugeschalteten Energiespeichermodule 1 eingestellt werden. Für eine Parallelschaltung von Strängen 11 sind für die einzelnen Stränge 11 serielle Induktivitäten 4 berücksichtigt, welche sich aus dem Aufbau und der Verschaltung der Stränge 11 ergeben oder über zusätzliche Drosseln realisiert werden können.

Eine Implementierung des erfindungsgemäßen Verfahrens zum Laden der Energiespeicherzellen 3 der Energiespeichermodule 1 der Energiespeichervorrichtung 10 kann beispielsweise als ein Computerprogrammprodukt erfolgen, wobei das Computerprogrammprodukt zum Beispiel als Hardware oder Software in einer Steuereinrichtung (nicht dargestellt) ablaufen kann.

Zusammenfassend werden mit der vorliegenden Erfindung ein Verfahren und eine Vorrichtung vorgeschlagen, mit denen vorteilhaft auf einfache Weise ein induktives Laden von Energiespeicherzellen eines Batteriedirektumrichters möglich ist. Dabei sind Funktionalitäten eines Ladegeräts bereits zum Großteil innerhalb des Batteriedirektumrichters realisiert, so dass das zum Laden der Energiespeicherzellen anzuschließende Ladegerät vorteilhaft entsprechend funktions- bzw. leistungsärmer ausgestaltet sein kann.

Vorteilhaft sind dadurch keine zusätzlichen Bauelemente seitens des Batteriedirektumrichtersystems erforderlich, was Kosten, Bauraum und Gewicht vorteilhaft reduziert. Durch die galvanisch getrennte Ankopplung resultiert ferner vorteilhaft eine große Auswahlmöglichkeit an primärseitig speisenden Energiequellen, wobei als Mindesterfordernis lediglich eine Bereitstellung einer Wechselgröße zum Überbrücken der galvanischen Trennung vorgesehen sein muss. Denkbar ist beispielsweise, die primärseitige Wicklung jeweils nur für einen Ladevorgang anzubringen oder permanent vorzusehen, wobei im zweiten Fall in einem Fahrbetrieb die primärseitige Wicklung offen bleiben kann.

Durch die leistungsmäßig stark dimensionierte Drossel bzw. Induktivität im Betriebsstromkreis des Batteriedirektumrichters muss lediglich ein geringer Zusatzaufwand in Form einer zusätzlichen Wicklung vorgesehen sein, um die erfindungsgemäße galvanisch getrennte induktive Ankopplungsmöglichkeit bereitzustellen.

Obwohl die vorliegende Erfindung anhand bevorzugter Ausführungsbeispiele beschrieben wurde, ist sie nicht darauf beschränkt. Der Fachmann wird also die beschriebenen Merkmale der Erfindung abändern oder miteinander kombinieren können, ohne vom Kern der Erfindung abzuweichen.

### Bezugszeichenliste

- 1: Energiespeichermodul
- 2: Halbleiterschalter
- 3: Energiespeicherzelle
- 4: Induktivität
- 5: Ankopplungseinrichtung
- 6: Ansteuereinrichtung
- 7: Motor
- 8: Kondensator
- 10: Energiespeichervorrichtung
- 11: Strang
- 20: System

## Patentansprüche

1. Schaltbare Energiespeichervorrichtung (10), aufweisend:
a) wenigstens zwei in Reihe geschaltete Energiespeichermodule (1), wobei jedes Energiespeichermodul (1) wenigstens eine elektrische Energiespeicherzelle (3) umfasst,
b) eine galvanisch getrennte, induktive Ankopplungseinrichtung (5) zum Laden der Energiespeicherzellen (3), wobei die wenigstens eine Energiespeicherzelle (3) mittels eines Halbleiterschalters (2) in einen Betriebsstromkreis schaltbar ist, wobei die Halbleiterschalter (2) der Energiespeichermodule (1) eine gleichrichtende Funktion für den Ladestrom übernehmen und
c) die Halbleiterschalter (2) in Form einer Halbbrückenschaltung oder einer Vollbrückenschaltung angeordnet sind, so dass jeweils wenigstens Halbwellen oder vollständige Wechselsignale für das Laden der elektrischen Energiespeicherzellen (3) verwendet werden,
***dadurch gekennzeichnet, dass***
d) eine Primärwicklung der Ankopplungseinrichtung (5) über einen Luftspalt getrennt beabstandet zu einer Sekundärwicklung der Ankopplungseinrichtung (5) angeordnet ist, und
e) die Sekundärwicklung in Reihe zu den wenigstens zwei in Reihe geschalteten Energiespeichermodulen (1) geschaltet ist.

2. Energiespeichervorrichtung (10) nach Anspruch 1, **dadurch gekennzeichnet, dass** die Ankopplungseinrichtung (5) als ein Transformator ausgebildet ist, insbesondere die Energiespeichervorrichtung (10) nur einen Transformator und zwei elektrische Energiespeicherzellen (3) umfasst und/oder der Transformator, insbesondere nur ein Transformator, in Serie zu zwei elektrischen Energiespeicherzellen (3) geschalten ist.

3. Energiespeichervorrichtung (10) nach Anspruch 2, **dadurch gekennzeichnet, dass** eine Primärwicklung des Transformators permanent oder abnehmbar auf einer Induktivität (4) im Betriebsstromkreis der Energiespeichervorrichtung (10) angeordnet ist, insbesondere die Induktivität (4) in Serie zu zwei elektrischen Energiespeicherzellen (3) geschlossen ist.

4. Energiespeichervorrichtung (10) nach einem der Ansprüche 1 bis 3, **dadurch gekennzeichnet, dass** mittels einer Variation der Schaltvorgange für die Halbleiterschalter (2) eine variable Spannung als Ausgangsspannung der Energiespeichervorrichtung (10) bereitgestellt ist.

5. Energiespeichervorrichtung (10) nach einem der Ansprüche 1 bis 4, **dadurch gekennzeichnet, dass** zwei Halbleiterschalter (2) in dem Betriebsstromkreis angeordnet sind.

6. Energiespeichervorrichtung (10) nach einem der vorhergehenden Ansprüche, **dadurch gekennzeichnet, dass** die Energiespeichervorrichtung (10) eine variable Anzahl von parallel geschalteten Strängen (11) mit seriell geschalteten Energiespeichermodulen (1) aufweist.

7. Energiespeichervorrichtung (10) nach Anspruch 6, **dadurch gekennzeichnet, dass** für jeden der Strange (11) eine serielle Induktivität (4) bereitgestellt ist.

8. Energiespeichervorrichtung (10) nach Anspruch 7, **dadurch gekennzeichnet, dass** die Induktivität (4) als Verdrahtungsinduktivität der Strange (11) oder als eine zusätzliche diskrete Induktivität (4) ausgebildet ist.

9. Energiespeichervorrichtung (10) nach einem der vorhergehenden Ansprüche, **dadurch gekennzeichnet, dass** die Ausgangsspannung der Energiespeichervorrichtung (10) einer elektronischen Ansteuereinrichtung (6), z.B. einem pulsweitenmodulierten Inverter, zuführbar ist zur Erzeugung einer drei Phasenspannung für eine Elektromaschine (7).

10. Verfahren zum Betreiben einer schaltbaren Energiespeichervorrichtung (10) nach einem der Ansprüche 1 bis 9, wobei ein Einprägen eines elektrischen Wechselsignals in eine Primärwicklung der Ankopplungseinrichtung (5) ausgeführt wird, wobei die wenigstens eine Energiespeicherzelle (3) mittels eines Halbleiterschalters (2) in einen Betriebsstromkreis geschalten wird,
**dadurch gekennzeichnet,**
**dass** ein Schalten der auf einer Sekundärseite der Ankopplungseinrichtung (5) in Form einer Brückenschaltung oder Vollbrückenschaltung angeordneten Halbleiterschalter (2) der Energiespeichermodule (1) derart ausgeführt wird, dass wenigstens Halbwellen des sekundärseitigen Wechselsignals für ein Laden der Energiespeicherzellen (3) der Energiespeichermodule (1) verwendet werden und die Sekundärwicklung in Reihe zu den wenigstens zwei in Reihe geschalteten Energiespeichermodulen (1) geschaltet ist.

11. Verfahren nach Anspruch 10, wobei für den Fall, dass während des Ladens keine Zwischenkreisspannung eines Kondensators (8) erforderlich ist, der Strom mittels einer Ansteuereinrichtung (6) am Kondensator (8) der Energiespeichervorrichtung (10) vorbeigeleitet wird.

12. System (20) mit einer steuerbaren Energiespeichervorrichtung (10) nach einem der Ansprüche 1 bis 9, wobei das System (20) ferner ein Ladegerät aufweist, wobei mittels des Ladegerätes Energiespeicherzellen (3) der Energiespeichervorrichtung (10) geladen werden können, wobei die Energiespeichervorrichtung (10) die Funktionalität einer Sekundärseite des Ladegeräts übernimmt.

13. System nach Anspruch 12, **dadurch gekennzeichnet, dass** die Halbleiterschalter (2) der Energiespeichervorrichtung (10) als Gleichrichter des Ladegeräts genutzt werden.

14. Computerprogrammprodukt mit Programmcodemitteln zur Durchführung des Verfahrens nach Anspruch 10 oder 11, wenn es auf einer elektronischen Steuereinrichtung abläuft oder auf einem computerlesbaren Datenträger gespeichert ist.

## Claims

1. Switchable energy storage device (10), comprising:
a) at least two series-connected energy storage modules (1), wherein each energy storage module (1) comprises at least one electrical energy storage cell (3),
b) a galvanically isolated, inductive coupling device (5) for charging the energy storage cells (3), wherein the at least one energy storage cell (3) is connectable into an operating circuit by means of a semiconductor switch (2), wherein the semiconductor switches (2) of the energy storage modules (1) perform a rectifying function for the charging current and
c) the semiconductor switches (2) are arranged in the form of a half-bridge circuit or a full-bridge circuit so that in each case at least half-cycles or full AC signals are used for charging the electrical energy storage cells (3),
**characterized in that**
d) a primary winding of the coupling device (5) is arranged so as to be spaced apart from a secondary winding of the coupling device (5) separated by an air gap, and
e) the secondary winding is connected in series with the at least two series-connected energy storage modules (1).

2. Energy storage device (10) according to Claim 1, **characterized in that** the coupling device (5) is in the form of a transformer, in particular the energy storage device (10) comprises just one transformer and two electrical energy storage cells (3) and/or the transformer, in particular just one transformer, is connected in series with two electrical energy storage cells (3).

3. Energy storage device (10) according to Claim 2, **characterized in that** a primary winding of the transformer is arranged permanently or removably on an inductance (4) in the operating circuit of the energy storage device (10), in particular the inductance (4) is connected in series with two electrical energy storage cells (3).

4. Energy storage device (10) according to one of Claims 1 to 3, **characterized in that** a variable voltage is provided as output voltage of the energy storage device (10) by means of varying the switching operations for the semiconductor switches (2).

5. Energy storage device (10) according to one of Claims 1 to 4, **characterized in that** two semiconductor switches (2) are arranged in the operating circuit.

6. Energy storage device (10) according to one of the preceding claims, **characterized in that** the energy storage device (10) has a variable number of parallel-connected strings (11) comprising series-connected energy storage modules (1).

7. Energy storage device (10) according to Claim 6, **characterized in that** a series inductance (4) is provided for each of the strings (11).

8. Energy storage device (10) according to Claim 7, **characterized in that** the inductance (4) is formed as wiring inductance of the strings (11) or as an additional discrete inductance (4).

9. Energy storage device (10) according to one of the preceding claims, **characterized in that** the output voltage of the energy storage device (10) can be fed to an electronic actuation device (6), for example a pulse-width-modulated inverter, to generate a three-phase voltage for an electric machine (7).

10. Method for operating a switchable energy storage device (10) according to one of Claims 1 to 9, wherein an AC electrical signal is impressed onto a primary winding of the coupling device (5), wherein the at least one energy storage cell (3) is connected into an operating circuit by means of a semiconductor switch (2), **characterized in that**
the semiconductor switches (2), arranged on a secondary side of the coupling device (5) in the form of a bridge circuit or full-bridge circuit, of the energy storage modules (1) are switched in such a way that at least half-cycles of the secondary-side AC signal are used for charging the energy storage cells (3) of the energy storage modules (1) and the secondary winding is connected in series with the at least two series-connected energy storage modules (1).

11. Method according to Claim 10, wherein, for the case where no DC link voltage of a capacitor (8) is required during charging, the current is conducted past the capacitor (8) of the energy storage device (10) by means of an actuation device (6).

12. System (20) comprising a controllable energy storage device (10) according to one of Claims 1 to 9, wherein the system (20) further has a charger, wherein energy storage cells (3) of the energy storage device (10) can be charged by means of the charger, wherein the energy storage device (10) performs the functionality of a secondary side of the charger.

13. System according to Claim 12, **characterized in that** the semiconductor switches (2) of the energy storage device (10) are used as rectifiers of the charger.

14. Computer program product comprising program code means for implementing the method according to Claim 10 or 11 when said computer program product is executed on an electronic control device or is stored on a computer-readable data storage medium.

## Revendications

1. Dispositif de stockage d'énergie commutable (10) comprenant :
a) au moins deux modules de stockage d'énergie (1) montés en série, chaque module de stockage d'énergie (1) comprenant au moins un élément de stockage d'énergie électrique (3),
b) un moyen de couplage inductif (5) à isolation galvanique destiné à charger les éléments de stockage d'énergie (3), l'au moins un élément de stockage d'énergie (3) pouvant être commuté dans un circuit électrique de fonctionnement au moyen d'un commutateur à semi-conducteur (2), les commutateurs à semi-conducteurs (2) des modules de stockage d'énergie (1) assumant une fonction de redressement du courant de charge et
c) les commutateurs à semi-conducteurs (2) étant disposés sous la forme d'un circuit en demi-pont ou en pont complet, de telle sorte qu'au moins des demi-ondes ou des signaux alternatifs complets soient utilisés pour charger les éléments de stockage d'énergie électrique (3),
**caractérisé en ce que**
d) un enroulement primaire du moyen de couplage (5) est disposé de manière à être séparé, par un intervalle d'air, d'un enroulement secondaire du moyen de couplage (5), et
e) l'enroulement secondaire est monté en série avec au moins deux modules de stockage d'énergie (1) montés en série.

2. Dispositif de stockage d'énergie (10) selon la revendication 1, **caractérisé en ce que** le moyen de couplage (5) est conçu comme un transformateur, en particulier le dispositif de stockage d'énergie (10) comprend un seul transformateur et deux éléments de stockage d'énergie électrique (3) et/ou le transformateur, en particulier un seul transformateur, est monté en série avec deux éléments de stockage d'énergie électrique (3).

3. Dispositif de stockage d'énergie (10) selon la revendication 2, **caractérisé en ce qu'**un enroulement primaire du transformateur est disposé de façon permanente ou amovible sur une inductance (4) du circuit électrique de fonctionnement du dispositif de stockage d'énergie (10), en particulier l'inductance (4) est montée en série avec deux éléments de stockage d'énergie électrique (3).

4. Dispositif de stockage d'énergie (10) selon l'une des revendications 1 à 3, **caractérisé en ce qu'**une tension variable est produite comme tension de sortie du dispositif de stockage d'énergie (10) par variation du processus de commutation des commutateurs à semi-conducteur (2).

5. Dispositif de stockage d'énergie (10) selon l'une des revendications 1 à 4, **caractérisé en ce que** deux commutateurs à semi-conducteur (2) sont disposés dans le circuit électrique de fonctionnement.

6. Dispositif de stockage d'énergie (10) selon l'une des revendications précédentes, **caractérisé en ce que** le dispositif de stockage d'énergie (10) comporte un nombre variable de conducteurs (11) montés en parallèle avec des modules de stockage d'énergie (1) montés en série.

7. Dispositif de stockage d'énergie (10) selon la revendication 6, **caractérisé en ce qu'**une inductance série (4) est prévue pour chacun des conducteurs (11).

8. Dispositif de stockage d'énergie (10) selon la revendication 7, **caractérisé en ce que** l'inductance (4) est conçue comme une inductance de câblage des conducteurs (11) ou comme une inductance discrète supplémentaire (4).

9. Dispositif de stockage d'énergie (10) selon l'une des revendications précédentes, **caractérisé en ce que** la tension de sortie du dispositif de stockage d'énergie (10) peut être amenée à un moyen de commande électronique (6), par exemple un inverseur modulé en largeur d'impulsion, pour générer une tension triphasée destinée à une machine électrique (7).

10. Procédé de fonctionnement d'un dispositif de stockage d'énergie commutable (10) selon l'une des revendications 1 à 9, un signal électrique alternatif étant appliqué à un enroulement primaire du dispositif de couplage (5), l'au moins un élément de stockage d'énergie (3) étant commutée dans un circuit électrique de fonctionnement au moyen d'un commutateur à semi-conducteur (2),
**caractérisé en ce que**
la commutation des commutateurs à semi-conducteur (2) des modules de stockage d'énergie (1), lesquels commutateurs sont disposés sur un côté secondaire du moyen de couplage (5) sous la forme d'un circuit en pont ou d'un circuit en pont complet, est effectuée de telle sorte qu'au moins des demi-ondes du signal alternatif côté secondaire soient utilisées pour charger les éléments de stockage d'énergie (3) des modules de stockage d'énergie (1) et que l'enroulement secondaire soit monté en série avec au moins deux modules de stockage d'énergie (1) montés en série.

11. Procédé selon la revendication 10, le courant étant transmis au condensateur (8) du dispositif de stockage d'énergie (10) à l'aide d'un moyen de commande (6) dans le cas où aucune tension de circuit intermédiaire d'un condensateur (8) n'est requise pendant la charge.

12. Système (20) comprenant un dispositif de stockage d'énergie commandable (10) selon l'une des revendications 1 à 9, le système (20) comprenant en outre un chargeur, des éléments de stockage d'énergie (3) du dispositif de stockage d'énergie (10) pouvant être chargées au moyen du chargeur, le dispositif de stockage d'énergie (10) assumant la fonctionnalité d'un côté secondaire du chargeur.

13. Système selon la revendication 12, **caractérisé en ce que** les commutateurs à semi-conducteurs (2) du dispositif de stockage d'énergie (10) sont utilisés comme redresseur du chargeur.

14. Logiciel comprenant des moyens formant code de programme destinés à la mise en oeuvre du procédé selon la revendication 10 ou 11, lorsque ledit logiciel est exécuté sur un dispositif de commande électronique ou est mémorisé sur un support de données lisible par ordinateur.
